# EUROPEAN PATENT SPECIFICATION

(11) **EP 3 192 367 B1**
(45) Date of publication and mention of the grant of the patent: **19.02.2020**
(21) Application number: 15839260.5
(22) Date of filing: 09.09.2015
(51) Int. Cl.: A01M 1/14, A01M 1/04, A01M 1/22

(54) **INSECT-TRAPPING UNIT AND INSECT TRAPPER**
INSEKTENFALLE UND INSEKTENFÄNGER
UNITÉ DE PIÉGEAGE D'INSECTES, ET PIÈGE À INSECTES

(30) Priority: 09.09.2014 JP 2014183545
(43) Date of publication of application: 19.07.2017
(73) Proprietor: Hohto Shoji Co. Ltd., Tokyo 145-0064 (JP)
(72) Inventor: SOENO, Masahiro, Tokyo 145-0064 (JP)
(74) Representative: Betten & Resch
(86) International application number: PCT/JP2015/075645
(87) International publication number: WO 2016/039390

(56) References cited:
- JP-A- H0 833 444
- JP-A- H0 833 444
- JP-A- H0 998 702
- JP-A- H0 998 702
- JP-A- H07 274 793
- JP-A- H07 274 793
- JP-A- 2001 037 394
- JP-A- 2001 037 394
- JP-A- 2003 070 402
- JP-A- 2003 070 402
- JP-A- 2007 300 890
- JP-A- 2008 187 995
- JP-A- 2008 187 995

## Description

### Technical Field

This invention is concerning an insect trapping unit and an insect trap.

### Background Art

Flies are known to be easily attracted by ultraviolet ray. Therefore, insect traps using such nature are commercially available. For example, an insect trap has an insect trapping paper and a light source emitting ultraviolet ray. An adhesive is applied on one surface of the insect trapping paper. When an adhesive surface of the insect trapping paper is irradiated by the light source, flies are attracted by the ultraviolet ray from the light source. As a result, flies are trapped by the insect trapping paper. Patent literatures 1 to 7 can be cited as related technologies.

The patent literature 1 discloses a pest control material including a fluorescent whitening agent.

The patent literature 2 discloses an insect trapping sheet of which at least a portion is applied a printing. According to the patent literature 2, an adhesive is applied on the printed surface of the insect trapping sheet. 35 % or more of electromagnetic wave having a wave length of 300 to 400 nm is reflected at the printed surface on average.

The patent literature 3 discloses an insect trapping sheet having a substrate sheet and a colored laminated sheet. The substrate sheet has a coating film including a yellowish fluorescent pigment. The coating film is provided on one or both of surfaces of the substrate sheet. The laminated sheet is provided on the coating film and has a layer of adhesive. According to the patent literature 3, a reflection rate of 5 to 30 % can be obtained for a ray having a wave length of 380 nm. A maximal reflection rate of 60 % or more of can be obtained for a ray having a wave length of 500 to 520 nm. An average reflection rate is of 40 % or more for a ray having a wave length of 280 to 700 nm.

The patent literature 4 discloses an insect repelling and trapping sheet having a fluorescent panel and an adhesive sheet provided on a surface of the fluorescent panel. The fluorescent panel includes a substance emitting ultraviolet ray or fluorescence by ultraviolet excitation. An adhesive layer is provided on a surface of a base material of the adhesive sheet.

The patent literatures 5 to 7 disclose insect traps using insect trapping paper and ultraviolet ray. The patent literature 5 discloses an example of applying the insect repelling and trapping sheet of the patent literature 4 to an insect trap. The patent literature 6 discloses providing an adhesive surface of an adhesive member on an optical path of ultraviolet ray from a light source. The patent literature 7 discloses an insect trap attachable on a wall.

JP 2007 300890 A discloses a member for capturing the pest insect which is constituted of a base material sheet, an attracting color layer arranged on the base material sheet, an ultraviolet-reflecting layer and/or an ultraviolet-absorbing layer arranged so as to cover at least a part of the surface of the attracting color layer, and a transparent adhesive layer arranged so as to cover at least a part of the surface at the outside of the attracting color layer and the ultraviolet-reflecting layer and/or the ultraviolet-absorbing layer. JP 2007 300890 provides a member for capturing a pest insect, having excellent capturing performance of the pest insect and convenience in a site requiring the capture of the pest insect, e.g. a house and a greenhouse, and hardly attracting the pest insects from a wide range.

JP H08 33444 A discloses a capturer for insects which is obtained by applying a fluorescent tacky sheet unit having a tacky layer formed on the surface of a fluorescent substance through base plates to sidewall surfaces of a casing unit, arranging a fluorescent lamp type attracting lamp on the side of an opening of the casing unit, developing the color of the fluorescence emitted from the fluorescent tacky sheet with ultraviolet rays from the attracting lamp and making the insect pests flying aiming at the attracting lamp further fly even to the fluorescent tacky sheet. The purpose of JP H08 33444 A is to obtain the subject capturer, capable of carrying out the attracting of insects and having a high capturing ratio of flying insect pests in a tacky layer by forming the tacky layer on the surface of a fluorescent substance and emitting the fluorescence from the fluorescent substance by ultraviolet rays.

JP 2003 070402 A discloses an insect-capturing tool which is mounted with three pieces of ultraviolet light LEDs in approximately horizontal direction at a vertically standing part of the insect-capturing tool main body. While, in the horizontal part, an insect-capturing paper as a capturing means, and a cover is put on it. The cover obtained by mixing a fluorescent material generating a blue light on receiving the ultraviolet light with a transparent acrylic resin and forming as a lattice form. By covering the cover over the insect-capturing paper having sticky property, noxious insects attracted to the ultraviolet light emitted from the ultraviolet light LEDs and gathered to the insect-capturing tool, perched on the cover irradiated by the ultraviolet light LEDs and emitting a blue colored fluorescent light, then fell and are captured by the insect-capturing paper. The ultraviolet light LEDs are small in size, consume low electric power, have the long life, can be produced at the low cost and can be carried to anywhere by using a dry battery as an electric source. JP 2003 070402 A provides a small size insect-capturing tool consuming low electric power, having a long life, capable of being produced at a low cost, being used in a field and freely being carried.

JP 2008 187995 A discloses an attracting color sheet which uses a synthetic resin or a fabric colored in insect pest-attracting color as a material and has a transparent adhesive layer as an outermost layer. In the sheet, a substance layer having visible light-reflecting characteristics is provided on the rear surface of the attracting color sheet and the adhesive layer is provided as the outermost layer. The substance layer having visible light-reflecting characteristics is bonded through the adhesive layer in one roll on the peripheral surface of a paper pipe and the substance layer having characteristics highly reflecting visible light is superposed and rolled in which an adhesive layer is interposed and rolled through the adhesive layer around an attractive color sheet on surface side of an insect pest-catching sheet in two or more roll stage and the sheet is formed in a roll-like product superposed and rolled in multiple layers, When spreading the insect pest-catching sheet formed in roll shape in length direction, an adhesive applied on the surface of the substance layer having characteristics highly reflecting visible light is bonded on the surface of the superposed attractive color sheet and the adhesive layer is formed on the surface of the attractive color sheet. JP 2008 187995 A solves the problem of further improving extermination efficiency of insect pests by providing an insect-repelling function and an adhesive catching function on either one surface of one sheet and providing an insect pest-attracting function on the other surface.

JP 2001 037394 A discloses a cartridge for a noxious insect-capturing device which is equipped with a roll of an adhesive sheet for capturing noxious insects, a paper feed roller rotatably supporting the adhesive sheet, a winding roller for winding the sheet, a transparent cover sheet to be put on the adhesive surface of the sheet wound on the roller and a cover sheet roller for rotatably supporting the sheet in a state of a roll. JP 2001 037394 A provides capturing technology enabling the population of captured noxious insects to more accurately be counted.

JP H07 274793 A discloses a device which is provided with an attraction light source, an attaching means, a reflection plane provided on the attaching means while forming an angle smaller than 90 deg. to a horizontal plane so as to directly irradiate a rising plane with light from the attraction light source, and a housing part having a harmful insect unmovable plane, and while using reflected emission from the attraction light source, harmful insects are let enter from an upper opening part. The purpose of JP H07 274793 A is to more improve an insect capture rate by geometrically improving a light emitting harmful insect capturer.

### Citation List

### [Patent Literature]

[PTL-1] Patent Literature 1: Japanese Patent Publication 2003-73212
[PTL-2] Patent Literature 2: Japanese Patent Publication 2009-240247
[PTL-3] Patent Literature 3: Japanese Patent Publication H08-51909
[PTL-4] Patent Literature 4: Japanese Patent Publication 2012-19758
[PTL-5] Patent Literature 5: Japanese Patent Publication 2012-19759
[PTL-6] Patent Literature 6: Japanese Patent Publication H05-168386
[PTL-7] Patent Literature 7: Japanese Patent Publication H09-098702

### Summary of the Invention

The inventor wanted an insect trapping unit, which can efficiently attract as many flies as possible, and an insect trap having such insect trapping unit.

An insect trapping unit in some embodiments has:
an adhesive sheet including a fluorescent whitening agent and being transparent to ultraviolet ray; and
a reflective member configured to reflect ultraviolet ray transmitted through the adhesive sheet.

The adhesive sheet has:
an adhesive surface; and
a back surface which is opposite to the adhesive surface.

The reflective member is opposed to the back surface of the adhesive sheet.

The adhesive sheet may be composed of:
a paper including a fluorescent whitening agent, being transparent to ultraviolet ray and configured with a sheet which is a base body of the adhesive sheet; and
an adhesive layer.

The paper may comprise a first surface configured to form the adhesive surface of the adhesive sheet and a second surface which is the back surface of the adhesive sheet. The adhesive layer may be on the first surface.

The reflective member may be an aluminum member.

The aluminum member may be an aluminum foil. The aluminum foil may be fixed on the back surface of the adhesive sheet.

The insect trapping unit may further comprise a coating layer. The coating layer may be arranged between the first surface of the paper and the adhesive layer.

The insect trapping unit may further have:
a substrate on which the adhesive sheet is mounted; and
a winding mechanism configured to wind up the adhesive sheet mounted on the substrate in one direction.

The reflective member may be arranged between the adhesive sheet and the substrate.

The substrate may have four edges. Among the four edges of the substrate, a first edge and a second edge opposite to the first edge may be in parallel to each other.

The winding mechanism may have:
a first roller having a first roller shaft, wherein the first roller shaft is arranged along the first edge so that the first roller shaft is parallel to the first edge; and
a second roller having a second roller shaft, wherein the second roller shaft is arranged along the second edge so that the second roller shaft is parallel to the second edge.

The adhesive sheet may have:
a first end; and
a second end opposite to the first end.

A length from the first end to the second end may be longer than a distance from the first roller to the second roller and shorter than a given length. The adhesive sheet is on the reflective member, so that the back surface opposes to the reflective member. The first end may be fixed to the first roller. The second end may be fixed to the second roller.

An insect trap in some embodiments has:
the above-mentioned insect trapping unit; and
a light source configured to emit an ultraviolet ray.

The adhesive sheet is arranged between the light source and the reflective member so that the ultraviolet ray can be received from the light source. The light source irradiates the adhesive surface of the adhesive sheet.

The light source may include:
a first light source having a first irradiation direction; and
a second light source having a second irradiation direction.

The first irradiation direction may be a direction in which the first light source irradiates the adhesive surface of the adhesive sheet. The second irradiation direction may be different to the first irradiation direction.

The light source may be an ultraviolet ray LED (Light Emitting Diode).

An insect trapping unit, which can efficiently attract as much as possible flies, and an insect trap having such insect trapping unit can be provided.

### Brief Description of the Drawings

[Fig. 1]

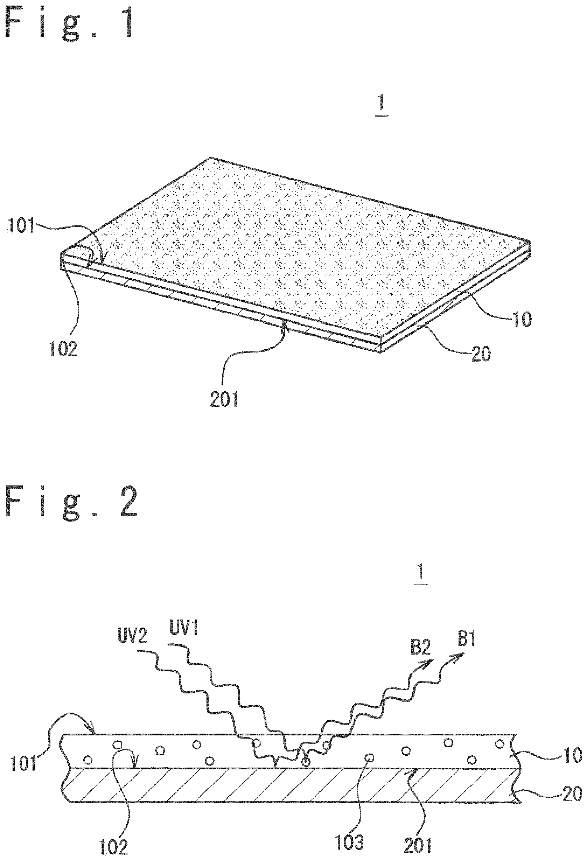

   Fig. 1 is a schematic diagram of an insect trapping unit 1.
[Fig. 2]
   Fig. 2 is a schematic sectional view of the insect trapping unit 1.
[Fig. 3]

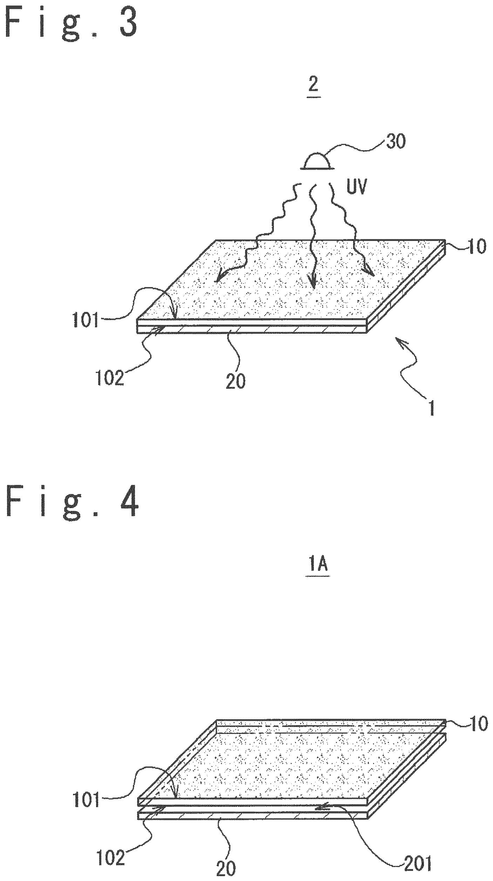

   Fig. 3 is a schematic drawing of an insect trap 2.
[Fig. 4]
   Fig. 4 is a schematic diagram of an insect trapping unit 1A.
[Fig. 5]

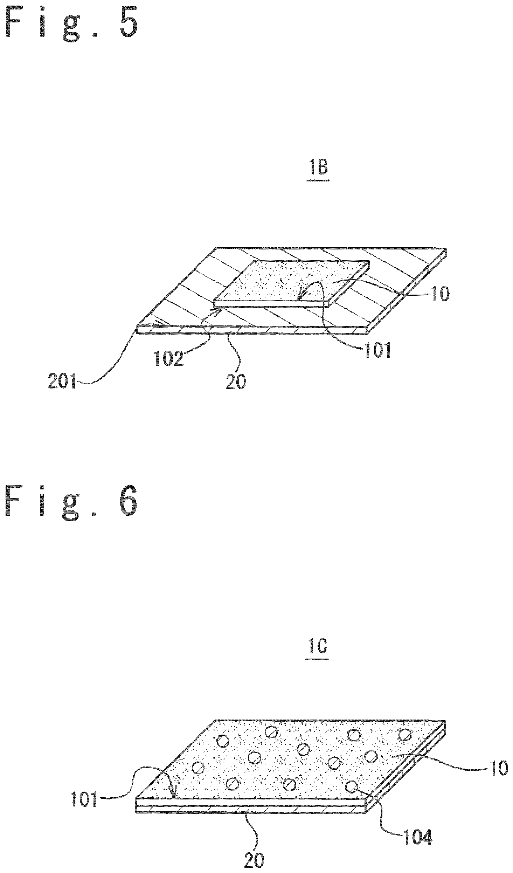

   Fig. 5 is a schematic diagram of an insect trapping unit 1B.
[Fig. 6]
   Fig. 6 is a schematic diagram of an insect trapping unit 1C.
[Fig. 7]

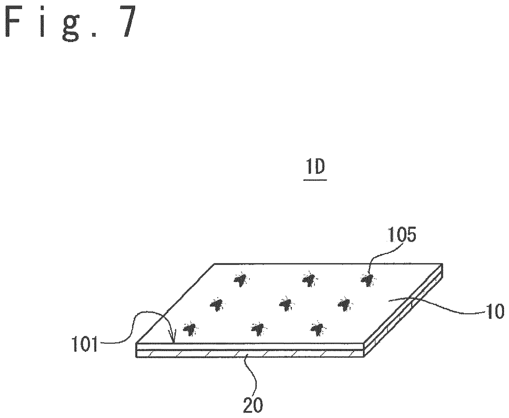

   Fig. 7 is a schematic diagram of an insect trapping unit 1D.
[Fig. 8]

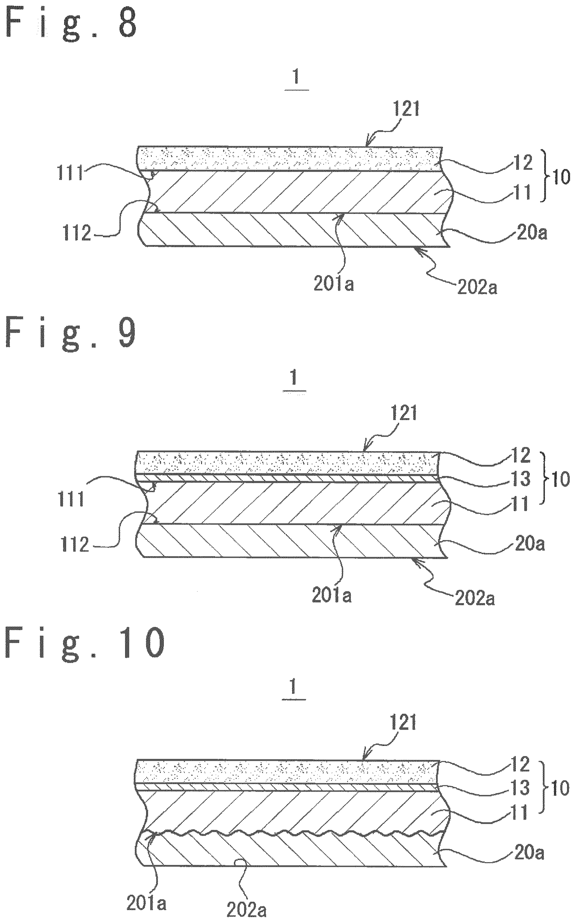

   Fig. 8 is a sectional view of the insect trapping unit 1.
[Fig. 9]
   Fig. 9 is a sectional view of the insect trapping unit 1.
[Fig. 10]
   Fig. 10 is a sectional view of the insect trapping unit 1.
[Fig. 11]

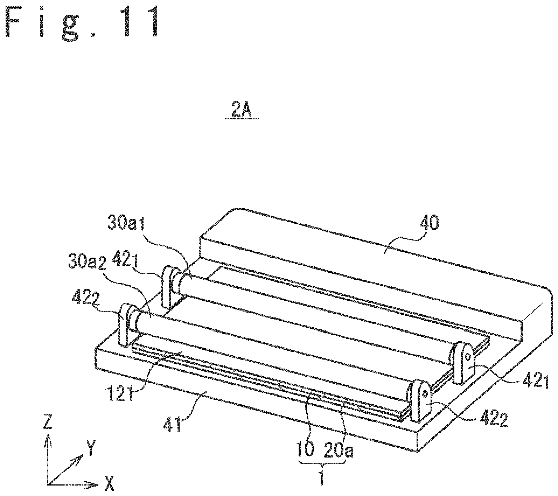

   Fig. 11 is an external view of an insect trap 2A.
[Fig. 12]

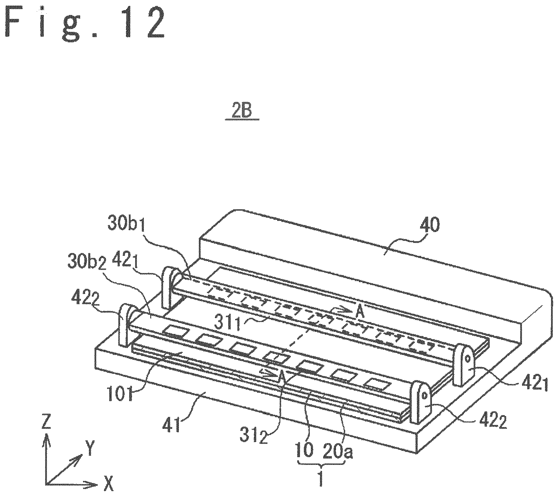

   Fig. 12 is an external view of an insect trap 2B.
[Fig. 13]

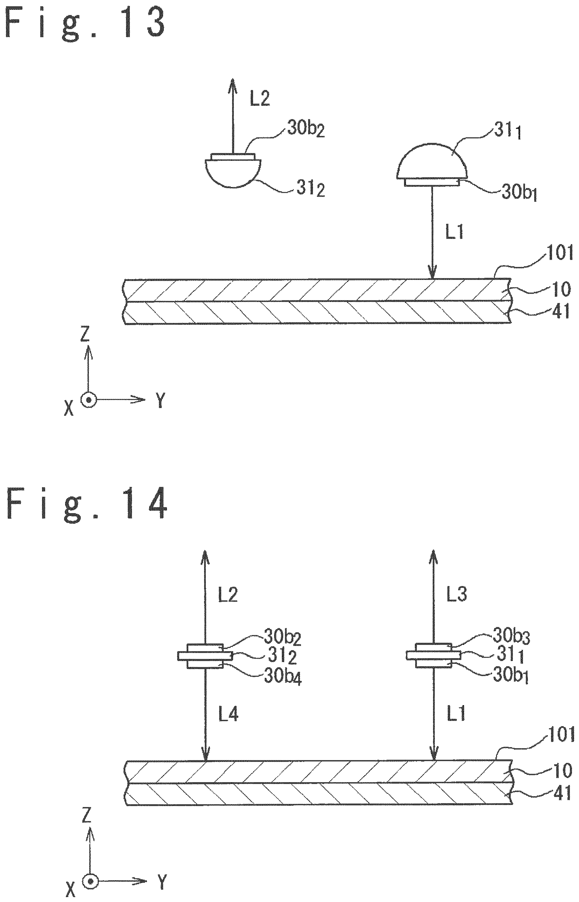

   Fig. 13 is a horizontal cross sectional view by A-A shown in Fig. 12.
[Fig. 14]
   Fig. 14 is a schematic diagram showing a modified example of arrangement of an ultraviolet ray LED.
[Fig. 15]

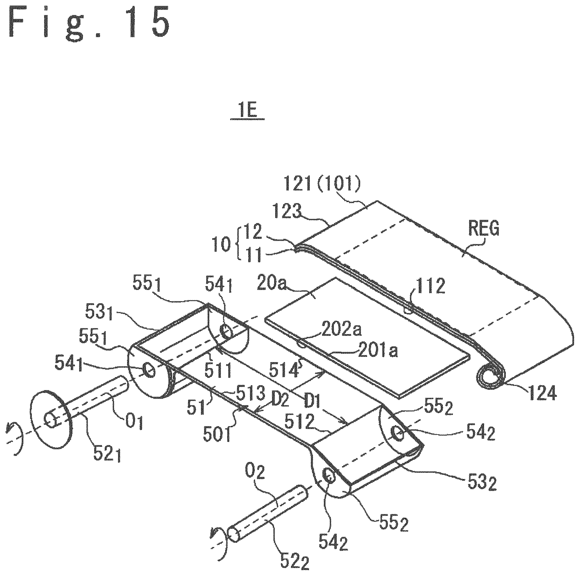

   Fig. 15 is an exploded three-dimensional view of an insect trapping unit 1E.
[Fig. 16]

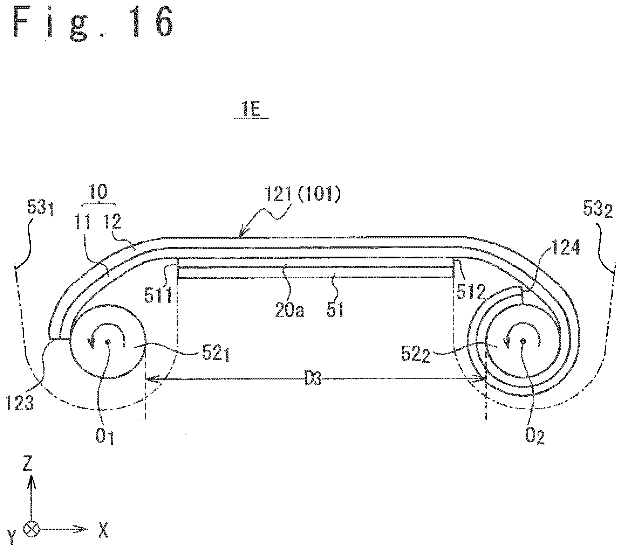

   Fig. 16 is a side view of the insect trapping unit 1E shown in Fig. 15.
[Fig. 17]

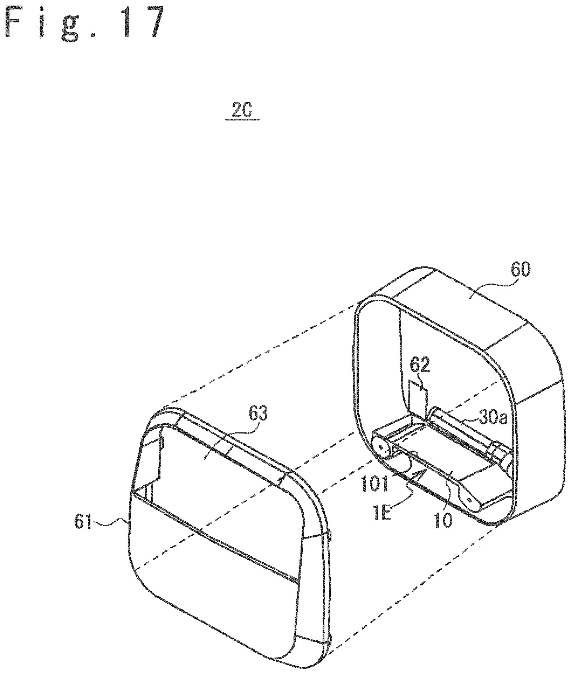

   Fig. 17 is an exploded three-dimensional view of an insect trap 2C.
[Fig. 18]

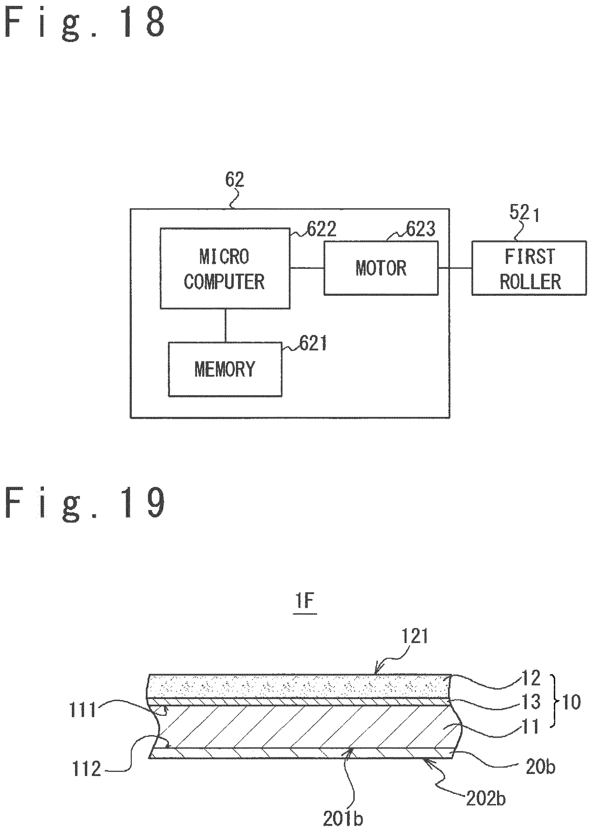

   Fig. 18 is a block diagram showing a configuration example of a drive control unit 62.
[Fig. 19]
   Fig. 19 is a cross sectional view of an insect trapping unit 1F.

### Description of Embodiments

In the following will be described embodiments of the present invention with reference to drawings . In the following embodiments, a same member will be denoted with a same symbol, in principle. Suffixes of symbols are for distinguishing members of same type.

### 1. The first embodiment

### 1. 1. Summary

Flies are known to be attracted by, not only ultraviolet ray (e.g.: wave length equal to or more than 300 nm, and equal to or less than 400 nm), but also visible ray. It has been found that, among visible ray, blue ray (e.g.: wave length equal to or more than 400 nm, and equal to or less than 500 nm) are effective. By using blue ray in addition to ultraviolet ray, in addition to flies attracted by ultraviolet ray, flies attracted by blue ray also can be trapped too. That is, a band of wave length with which flies are trapped will become broader (e.g.: wave length equal to or more than 350 nm, and equal to or less than 500 nm). Therefore, the inventor of the present invention focused on widening the band of wave length with which flies are trapped and increasing illuminance of blue ray. Then, the inventor considered that, the more the blue ray illuminance is increased, in other word, the brighter the blue ray is, the more flies are easily trapped. In the following, will be described a method for increasing the blue ray illuminance.

### (Insect trapping unit)

Fig. 1 is a schematic diagram of an insect trapping unit 1. As shown in Fig. 1, the insect trapping unit 1 has an adhesive sheet 10 and a reflective member 20. The adhesive sheet 10 has an adhesive surface 101 and a back surface 102. The back surface 102 is a surface which is opposite to the adhesive surface 101. It should be noted that the insect trapping unit is one of replacement parts, with which an insect trap described below is configured, and is also called "cartridge".

The adhesive sheet 10 plays a role of capturing flies. The adhesive sheet 10 includes a fluorescent whitening agent and is transparent to ultraviolet ray. The adhesive sheet 10 may have any shape, may be square-shaped, or may be polygon-shaped. Fig. 1 shows an example of rectangle-shaped adhesive sheet 10. The adhesive surface 101 is a surface which is applied with an adhesive and exists on whole surface of the adhesive sheet 10. The adhesive has a viscosity for capturing files which landed on the adhesive surface 101. It should be noted that files are an example of flying insects. Such flying insects may be, for example, moths.

The reflective member 20 is a member which can reflect ultraviolet ray. The reflective member 20 is arranged at a position opposed to the back surface 102 of the adhesive sheet 10. In simpler words, the reflective member 20 is arranged under the adhesive sheet 10. The reflective member 20 receives a part of ultraviolet ray transmitted through the adhesive sheet 10 and reflects the received ultraviolet ray to the adhesive sheet 10. In the example of Fig. 1, the reflective member 20 has a same shape and a same size as the adhesive sheet 10. In addition, a surface 201 of the reflective member 20 is lightly in contact with the whole back surface 102 of the adhesive sheet 10. Both of the reflective member 20 and the adhesive sheet 10 may be fixed.

The fluorescent whitening agent included in the adhesive sheet 10 has a nature, when receiving ultraviolet ray, of exciting the ultraviolet ray and emitting visible ray. The visible ray is, in particular, blue ray. In other words, the adhesive sheet 10 converts irradiated ultraviolet ray to blue ray, by an interaction between ultraviolet ray and the fluorescent whitening agent.

Fig. 2 is a schematic sectional view of the insect trapping unit 1. It should be noted that the description of Fig. 2 is simplified in order to promote understanding.

Ultraviolet ray are irradiated from the outside to the adhesive surface 101 of the adhesive sheet 10. The process followed by the irradiated ultraviolet ray can be broadly categorized in the following two processes. The first one is a process during which a part of ultraviolet ray UV1, among the irradiated ultraviolet ray, interacts with the fluorescent whitening agent 103 of the adhesive sheet 10 (process 1). The second one is a process during which a part of ultraviolet ray UV2 is transmitted through the adhesive sheet 10 (process 2) .

During the process 1, the ultraviolet ray UV1 is converted to blue ray B1 by the interaction with the fluorescent whitening agent 103. In the example of Fig. 2, the fluorescent whitening agent 103 is schematically expressed as circles. The blue ray B1 is radiated upward the adhesive sheet 10.

On the other hand, during the process 2, the ultraviolet ray UV2 is transmitted through the adhesive sheet 10 and reflected on the surface (reflective surface) 201 of the reflective member 20. The reflected ultraviolet ray UV2 is again incident inside the adhesive sheet 10. Then, the ultraviolet ray UV2 is converted to blue ray B2, similarly to the process 1. It is sufficient that the adhesive sheet 10 includes the fluorescent whitening agent and is transparent to ultraviolet ray so that the process 2 occurs.

In a case where no reflective member 20 is provided, the process 2 does not exist. In such case, the blue ray radiated from the adhesive sheet 10 is only the blue ray B1 shown in Fig. 2. On the other hand, in a case where the reflective member 20 is provided, the process 2 exists, in addition to the process 1. In such case, the blue ray radiated from the adhesive sheet 10 is configured with the blue ray B2, in addition to the blue ray B1, as shown in Fig. 2. That is, in a case where the reflective member 20 is provided, the illuminance of the blue ray radiated from the adhesive sheet 10 is higher than the illuminance in a case without reflective member 20. It should be noted that the "illuminance (brightness) " may designate, not only a strict physical quantity, but also a psychological physical quantity (degree of brightness that human beings feel) . The description of Fig. 2 is focused on the ultraviolet ray interacting with a fluorescent whitening agent. Of course, ultraviolet ray which do not interact with the fluorescent whitening agent may exist too.

As described above, the reflective member 20 is arranged under the adhesive sheet 10. Therefore, when ultraviolet ray is irradiated on the adhesive sheet 10, a part of the ultraviolet ray reflected by the reflective member 20 is radiated outside the adhesive sheet 10 as blue ray. As a result, the illuminance of the blue ray radiated from the adhesive sheet 10 increases, in comparison with the case where no reflective member 20 is provided. In addition, the band of wave length which attracts flies is widened since ultraviolet ray is also radiated from the adhesive sheet 10 by the reflective member 20. That is, the illuminance of blue ray can be increased by widening the bandwidth of wave length for capturing flies. As a result, a greater number of flies can be attracted.

### (Insect trap)

Fig. 3 is a schematic drawing of an insect trap 2. The insect trap 2 has the insect trapping unit 1 and a light source 30. The light source 30 emits ultraviolet ray. The light source 30 is arranged above the adhesive sheet 10 and irradiates the ultraviolet ray to the adhesive surface 101 of the adhesive sheet 10. In other words, the adhesive sheet 10 is arranged between the light source 30 and the reflective member 20, so that the ultraviolet ray can be received from the light source 30. The wave length of the ultraviolet ray UV is, for example, equal to or more than 300 nm and equal to or less than 400 nm. The number of the light source 30 may be plural. In such case, a plurality of light sources 30 preferably is arranged at equal intervals . This is in order to uniformly irradiate the adhesive surface 101 of the adhesive sheet 10.

### (Operations of insect trap 2)

When the insect trap 2 operates, the light source 30 irradiates ultraviolet ray UV to the adhesive surface 101 of the adhesive sheet 10. As a result, as described above, the adhesive sheet 10 converts the ultraviolet ray UV to blue ray. And, the blue ray is radiated above the adhesive sheet 10. At this time, ultraviolet ray is also radiated. Flies flying around the insect trap 2 are easily attracted by this blue ray in particular. Flies attracted by this blue ray land on the adhesive surface 101 of the adhesive sheet 10. Thus, flies are captured. The adhesive sheet 10 is replaced to a new adhesive sheet 10, when a certain (arbitrary) number or more of flies are captured, or periodically, by an operator.

Effects of the insect trap 2 will be described. The insect trap 2 has an insect trapping unit 1 which radiates blue ray with a very high illuminance. Thus, flies can be attracted by use of, not only ultraviolet ray, but also blue ray with a very high illuminance. That is, an insect trap which can efficiently attract greater number of flies is provided. In addition, following secondary effects can be obtained. Human eyes feel that, the higher blue ray illumination is, the higher the insect capturing ability of the insect trap 2 is. Therefore, there is an advantage in that the insect capturing ability of the insect trap 2 can be easily explained to a third person, visually.

### 1. 2. First example of modification

Fig. 4 is a schematic diagram of an insect trapping unit 1A. As shown in Fig. 4, the adhesive sheet 10 is slightly separated from the reflective member 20. That is, there is a slight gap between the adhesive sheet 10 and the reflective member 20. From a point of view of increasing blue ray illuminance, a distance from the surface 201 of the reflective member 20 to the back surface 102 of the adhesive sheet 10 is, for example, preferably less than 1 mm. In addition, the whole surface of the adhesive sheet 10 may not be separated from the reflective member 20, that is, a part of the adhesive sheet 10 may be separated from the reflective member 20.

### 1. 3. Second example of modification

Fig. 5 is a schematic diagram of an insect trapping unit 1B. In a case of the insect trapping unit 1B shown in Fig. 5, the size of the reflective member 20 is larger than the one of the adhesive sheet 10. In this case, the illuminance of the blue ray radiated from the adhesive sheet 10 can be increased in an area where the adhesive sheet 10 and the reflective member 20 are opposite to each other.

### 1. 4. Third example of modification

Fig. 6 is a schematic diagram of an insect trapping unit 1C. The insect trapping unit 1C shown in Fig. 6 has a plurality of holes 104 in the adhesive sheet 10. Therefore, the reflective member 20 is exposed through each of the plurality of holes 104. The shape of each hole 104 is arbitrary. In the example of Fig. 6, each hole 104 has a circular shape. The holes 104 are arranged in an arbitrary pattern. In the example of Fig. 6, each hole 104 is arranged at regular intervals.

Following points should be noted in the third example of modification. The blue ray is not emitted in each hole 104 because there is no adhesive sheet 10 inside. As a result, the illuminance of the emitted blue ray decreases. From this point of view, the size of each hole 104 is preferably as small as possible, and the number of the holes 104 is preferably as few as possible.

### 1. 5. Fourth example of modification

Fig. 7 is a schematic diagram of an insect trapping unit 1D. As shown in Fig. 7, a plurality of marks is printed on the adhesive surface 101 of the adhesive sheet 10. In the example of Fig. 7, each of the plurality of marks represents a "fly". The positions to print the plurality of marks are arbitrary. In general, flies have a nature of being attracted by marks having a same shape as them. Therefore, efficiency of capturing flies further increases. Of course, other marks can be used without problem as long as flies are attracted by such marks.

### 1. 6. Insect trapping unit

Above-mentioned insect trapping unit 1 will be described in detail. Fig. 8 is a sectional view of the insect trapping unit 1. The insect trapping unit 1 differs from the insect trapping unit 1 shown in Fig. 1 in two following points. The first difference is in the configuration of the adhesive sheet 10. The second difference is in the material of the reflective member 20.

### (Adhesive sheet)

As shown in Fig. 8, the adhesive sheet 10 is provided with a paper 11 and an adhesive layer 12. The paper 11 constitutes a sheet which is a base body of the adhesive sheet 10. The paper 11 has a front surface 111 and a back surface 112. The front surface 111 is also called the first surface and is a surface on which the adhesive surface 101 of the adhesive sheet 10 shown in Fig. 1 is to be formed. The back surface 112 is also called the second surface and is the back surface 102 of the adhesive sheet 10 shown in Fig. 1. The back surface 112 of the paper 11 is, as described below, in contact with the reflective surface 201a of the aluminum member 20a.

The paper 11 will be described. Firstly, the paper 11 includes the fluorescent whitening member. As materials of the fluorescent whitening agent can be listed a Bis-stilbene-disulfonic-acid-derivative or a Bis-styryl-biphenyl derivative. Secondly, the paper 11 has a basis weight equal to or more than 60 g/m² and equal to or less than 100 g/m², for example, so that ultraviolet ray transmits through the paper 11. It should be noted that the color of the paper 11 is, for example, white. The reason is because, in a case where ultraviolet ray is irradiated on a white paper, more ultraviolet ray is radiated than a case where ultraviolet ray is irradiated on a black paper (for example). The whiteness is, for example, preferably equal to or more than 80 %.

The adhesive layer 12 is arranged on an upper layer of the front surface 111 of the paper 11. The surface 121 of the adhesive layer 12 corresponds to the adhesive surface 101 of the adhesive sheet 10 (see Fig. 1) . The main component of the adhesive layer 12 is, for example, polybutene. The main component of the adhesive layer 12 may be other material, as long as this material has a nature similar to the one of polybutene.

Fig. 9 is a sectional view of the insect trapping unit 1. In the example of Fig. 9, the adhesive layer 12 is arranged in an upper layer of the paper 11. Therefore, due to the material nature of the paper 11, components of the adhesive layer 12 easily penetrate into the paper 11. As a result, an intensity of the paper 11 is weakened. So, the front surface 111 of the paper 11 is coated so that the components of the adhesive layer 12 does not penetrate from the front surface 111 of the paper 11 to the back surface 112 of the paper 11. For this reason, a thin coating layer 13 is provided between the front surface 111 of the paper 11 and the adhesive layer 12. In order to further increase the intensity of the paper 11, the back surface 112 of the paper 11 may be coated further.

Alternatively, in order to avoid fading or degradation of the paper 11, the coating layer 13 may be provided between the front surface 111 of the paper 11 and the adhesive layer 12. In this case, the coating layer 13 is preferably formed with a material having light resistance to ultraviolet ray. The paper 11 easily fades or degrades when exposed to ultraviolet ray. As a result, the blue ray illuminance decreases. By providing the coating layer 13, the decrease of blue ray illuminance can be suppressed. It should be noted that a light-resistant ink may be applied on the front surface 111 of the paper 11 instead of the coating layer 13. In this case, the light-resistant ink may be an ink including a component capable of protect the paper 11 from ultraviolet ray. In addition, as long as no technical contradiction occurs, various members (materials) may be provided on the front surface 111 of the paper 11 in order to suppress penetration of components of the adhesive layer 12 and protect from ultraviolet ray. For example, the coating layer 13 shown in Fig. 9 may be provided on the front surface 111 of the paper 11 on which light-resistant ink is applied.

A case where a coating layer 13 is provided as shown in Fig. 9 will be described below as an example. It should be noted that illustration of the coating layer 13 may be omitted appropriately.

### (Reflective member)

As shown in Fig. 9, the insect trapping unit 1 has an aluminum member 20a, in addition to the adhesive sheet 10. The aluminum member 20a is an example of the reflective member 20. The aluminum member 20a has a reflective surface 201a in contact with the paper 11 and a back surface 202a on the opposite side of the reflective surface 201a. The reflective surface 201a and the back surface 202a are both flat. In particular, the aluminum member 20a is an aluminum plate of which the main component is aluminum. Aluminum has a nature of which ultraviolet ray reflectance is very high in comparison with other members. In addition, its processability, its lightweightness, its strength and its availability are all very high. From those points of view, the aluminum member 20a is adopted as the reflective member 20. It should be noted that aluminum purity may be 98 %, for example. The thickness of the aluminum member 20a may be 0.5 mm, for example.

It should be noted that the reflective member 20 shown in Fig. 9 may be configured as shown in Fig. 10. In the example of Fig. 10, the reflective surface 201a of the aluminum member 20a may be slightly rough. However, to increase ultraviolet ray reflectance, the reflective surface 201a and the back surface 202a both are preferably flat, as shown in Fig. 9. In a case where the reflective surface 201a is rough, ultraviolet ray reflectance may decrease due to irregular reflection.

### 1. 7. Insect trap

Fig. 11 is an external view of an insect trap 2A. As shown in Fig. 11, the insect trap 2A has a first light source 30a₁, a second light source 30a₂ and a housing 40, in addition to the insect trapping unit 1.

The housing 40 has a pedestal part 41, a pair of first connectors 42₁ and a pair of second connectors 42₂. The pedestal part 41 has an almost rectangular shape as seen from above. The material of the pedestal part 41 (housing 40) is mainly steel. The pedestal part 41 is a place on which the insect trapping unit 1 is to be mounted. Fig. 11 shows a state in which the insect trapping unit 1 is mounted on the pedestal part 41. The insect trapping unit 1 may be fixed on the pedestal part 41 or may not be fixed. For example, in a case where the housing 40 is attached on a wall, the back surface 202a of the aluminum member 20a is fixed to the pedestal part 41, so that the insect trapping unit 1 does not drop from the housing 40 (see Fig. 9) . In addition, the reflective surface 201a of the aluminum member 20a is also fixed to the back surface 112 of the paper 11. It should be noted that a double sided tape may be used for the above mentioned fixations, for example. On the other hand, in a case where the housing 40 is attached on a place in parallel to the floor, the back surface 202a of the aluminum member 20a does not need to be fixed on the pedestal part 41. Similarly, the reflective surface 201a of the aluminum member 20a does not need to be fixed on the back surface 112 of the paper 11, either. Contact between the two elements is enough.

The first light source 30a₁ and the second light source 30a₂ both are light source emitting ultraviolet ray and have a shape of elongated cylinder. The first light source 30a₁ is connected to the pair of first connectors 42₁. The second light source 30a₂ is connected to the pair of second connectors 42₂.

In detail, the first light source 30a₁ and the second light source 30a₂ are separated from each other in Y axis direction so that the first light source 30a₁ and the second light source 30a₂ are arranged in parallel. The first light source 30a₁ and the second light source 30a₂ both are arranged above the pedestal part 41 in order to irradiate the insect trapping unit 1. The distance (H) from each of the first light source 30a₁ and the second light source 30a₂ to the adhesive surface 101 of the adhesive sheet 10 (the surface 121 of the adhesive layer 12) is, for example, H = 1.5 cm ± 0.5 cm. The shorter the distance (H) is, the more the illuminance of the emitted blue ray increases. On the other hand, if the distance (H) is shorter than 1.5 cm, a speed of degradation of the adhesive layer 12 may increase. It should be noted that each of the first light source 30a₁ and the second light source 30a₂ may be a black light.

When the insect trap 2A operates, the first light source 30a₁ and the second light source 30a₂ both irradiate ultraviolet ray to the adhesive sheet 10, simultaneously. Thus, blue ray is emitted.

### 2. Second embodiment.

An ultraviolet ray LED (Light Emitting Diode) with a high directivity may be used as the light source. Fig. 12 is an external view of an insect trap 2B.

The insect trap 2B has a first LED socket 31₁ and a second LED socket 31₂. The first LED socket 31₁ has a plurality of first ultraviolet ray LEDs 30b₁. The first LED socket 31₁ is connected to a pair of first connectors 42₁. The second LED socket 31₂ has a plurality of second ultraviolet ray LEDs 30b₂. The second LED socket 31₂ is connected to a pair of second connectors 42₂.

Each of the plurality of first ultraviolet ray LEDs 30b₁ is arranged along the longitudinal direction of the first LED socket 31₁, at equal intervals. Similarly, each of the plurality of second ultraviolet ray LEDs 30b₂ is arranged along the longitudinal direction of the second LED socket 31₂, at equal intervals, too. The number of the first ultraviolet ray LEDs 30b₁ arranged to the first LED socket 31₁ may be arbitrary (e.g.: nine) . Similarly, the number of the second ultraviolet ray LEDs 30b₂ arranged to the se3cond LED socket 31₂ may be arbitrary, too (e.g.: nine).
ultraviolet ray LEDs is characteristic for having a long life and low power consumption. On the other hand, the directivity of ultraviolet ray LEDs is higher than the one of other light sources (e.g. : black light) . Therefore, when using an ultraviolet ray LED, an illuminance of ultraviolet ray irradiated outside the insect trap is lower than the one with other light sources.

Therefore, the plurality of first ultraviolet ray LEDs 30b₁ irradiates ultraviolet ray to a same direction, respectively. Also, the plurality of second ultraviolet ray LEDs 30b₂ irradiates ultraviolet ray to a same direction, respectively. However, the former irradiation direction is different from the latter irradiation direction.

The irradiation direction will be explained by referring to Fig. 13. Fig. 13 is a horizontal cross sectional view by A-A shown in Fig. 12. Each of the plurality of first ultraviolet ray LEDs 30b₁ are directed to the adhesive surface 101 of the adhesive sheet 10 (the surface 121 of the adhesive layer 12) . That is, each first ultraviolet ray LED 30b₁ irradiates ultraviolet ray to the adhesive surface 101 of the adhesive sheet 10. This irradiation direction is shown as L1. On the other hand, each of the plurality of second ultraviolet ray LEDs 30b₂ are directed to a direction opposite to the adhesive surface 101 of the adhesive sheet 10. That is, each second ultraviolet ray LED 30b₂ irradiates ultraviolet ray upward the insect trap 2B. This irradiation direction is shown as L2.

Compared to a case in which all ultraviolet ray LEDs irradiates the adhesive surface 101 of the adhesive sheet 10, the illuminance of the emitted blue ray decreases. On the other hand, insect trapping ability hardly declines since the plurality of second ultraviolet ray LEDs 30b₂ irradiates ultraviolet ray upward the insect trap 2B.

### (Modified example)

Fig. 14 is a schematic diagram showing a modified example of arrangement of an ultraviolet ray LED. Fig. 14 corresponds to a horizontal cross-sectional view by A-A shown in Fig. 12. The first LED socket 31₁ further has a plurality of third ultraviolet ray LEDs 30b₃. Each of the plurality of third ultraviolet ray LEDs 30b₃ irradiates ultraviolet ray upward the insect trap 2B. This irradiation direction is shown as L3. The second LED socket 31₂ further has a plurality of fourth ultraviolet ray LEDs 30b₄. Each of the plurality of fourth ultraviolet ray LEDs 30b₄ irradiates ultraviolet ray to the adhesive surface 101 of the adhesive sheet 10. This irradiation direction is shown as L4.

In this modification example can be obtained an effect in that the illuminance of blue ray can be maintained while maintaining enough illuminance of ultraviolet ray radiated outside the insect trap.

### 3. The third embodiment.

In the present embodiment, another type of insect trapping unit and inset trap will be shown as example. Fig. 15 is an exploded three-dimensional view of an insect trapping unit 1E. Fig. 16 is a side view of the insect trapping unit 1E shown in Fig. 15. In Fig. 16, a first roller holder 53₁ and a second roller holder 53₂ are shown by use of imaginary lines. Illustration of holes 54₁ and 54₂ is omitted.

### (Winding mechanism)

The insect trapping unit 1E further has a substrate 51 and a winding mechanism which is configured to wind up the adhesive sheet 10 in one direction. The winding mechanism has a first roller 52₁, a second roller 52₂, a first roller holder 53₁ and a second roller holder 53₂.

The substrate 51 is a board on which the adhesive sheet 10 is to be mounted. The substrate 51 is also called a table or a mounting section. The substrate 51 plays a role of holding the adhesive surface 101 of the adhesive sheet 10 (the surface 121 of the adhesive layer 12) in an exposed state. Upward the substrate 51, the adhesive sheet 10 exists, via an aluminum member 20a. That is, the reflective member (aluminum member 20a) is arranged between the adhesive sheet 10 and the substrate 51. Flies are trapped in a region RGE of the adhesive sheet 10 shown in Fig. 15.

Details of the substrate 51 are as following. The substrate 51 is a board with a rectangular shape. The substrate 51 has a first edge 511, a second edge 512 opposed to the first edge 511, a third edge 513 and a fourth edge 514 opposed to the third edge 513. The first edge 511 and the second edge 512 are parallel to each other. The third edge 513 and the fourth edge 514 are parallel to each other. In order to obtain intensity of the substrate 51, a thickness of the substrate 51 is, for example, equal to or more than 1mm and equal to or less than 5mm. The length D1 of the substrate 51 (in a longitudinal direction) is longer than the width D2 of the substrate 51. The substrate 51 is formed with a synthetic resin, for example. The substrate51, the first roller holder 53₁ and the second roller holder 53₂ may be integrally formed with a same material (e.g.: a synthetic resin), for example. It should be noted that a portion of an edge may be lacking and may be bent.

The first roller 52₁ plays a role of winding up a used portion (see the region REG) of the adhesive sheet 10 around itself. The first roller 52₁ has a first roller shaft O₁ and rotates around the first roller shaft O₁. A length of the first roller 52₁ (in a direction of the first roller shaft O₁) is almost equal to the width D2 of the substrate 51. This length may be slightly longer than the width D2. The first roller 52₁ is arranged along the first edge 511 so that the first roller shaft O₁ is parallel to the first edge 511. That is, the first roller 52₁ is parallel to the first edge 511. The first roller 52₁ is inserted into a pair of holes 54₁ of the first roller holder 53₁. The first roller 52₁ rotates around the first roller shaft O₁, in a clockwise direction or a counterclockwise direction. When the adhesive sheet 10 is winded up by the first roller 52₁, the rotation direction of the first roller 52₁ is in the counterclockwise direction. It should be noted that the "counterclockwise direction" means a direction of rotating around the Y axis, when looking from the negative direction to the positive direction of the Y axis, from the positive direction of X axis to the positive direction of Z axis (see arrow). The "clockwise direction" is a direction opposite to the counterclockwise direction.

The second roller 52₂ winds up an unused portion of the adhesive sheet 10 around itself. The second roller 52₂ has a second roller shaft O₂ and rotates around the second roller shaft O₂. A length of the second roller 52₂ (in the direction of the second roller shaft O₂) is almost equal to the width D2 of the substrate 51. This length may be slightly longer than the width D2. The second roller 52₂ is arranged along the second edge 512 so that the second roller shaft O₂ is parallel to the second edge 512. That is, the second roller 52₂ is parallel to the second edge 512. The second roller 52₂ is inserted to a pair of holes 54₂ of the second roller holder 53₂. The second roller 52₂ rotates around the second roller shaft O₂ in a clockwise direction or a counterclockwise direction. When the adhesive sheet 10 is winded up by the first roller 52₁, the rotation direction of the second roller 52₂ is in the counterclockwise direction.

The first roller holder 53₁ stores the first roller 52₁ and the adhesive sheet 10 winded up by the first roller 52₁. The first roller holder 53₁ has a pair of holes 54₁ and a pair of side plates 55₁. The first roller holder 53₁ has approximatively a "U" letter shape when looked from the Y axis direction. The two holes 54₁ are provided in appropriate positions of the two side plates 55₁, respectively, so that the first roller 52₁ and the adhesive sheet 10 winded up by the first roller 52₁ can be stored. A diameter of each of the two holes 54₁ is slightly larger than a diameter of the first roller 52₁. The first roller holder 53₁ is connected to the first edge 511 of the substrate 51. The first roller holder 53₁ itself is, for example, integrally formed with a synthetic resin.

The second roller holder 53₂ stores the second roller 52₂ and the unused adhesive sheet 10 winded up around the second roller 52₂. The second roller holder 53₂ has a pair of holes 542 and a pair of side plates 55₂. The second roller holder 53₂ has approximatively a "U" letter shape when looked from the Y axis direction. The two holes 54₂ are provided in appropriate positions of the two side plates 55₂, respectively, so that the second roller 52₂ and the unused adhesive sheet 10 winded up around the second roller 52₂ can be stored. A diameter of each of the two holes 54₂ is slightly larger than a diameter of the second roller 52₂. The second roller holder 53₂ is connected to the second edge 512 of the substrate 51. The second roller holder 53₂ itself is, for example, integrally formed with a synthetic resin.

The aluminum member 20a has, for example, a same size as the substrate 51. The aluminum member 20a is arranged on the substrate 51. Practically, a back surface 202a of the aluminum member 20a may be fixed to the surface 501 of the substrate 51. In particular, the aluminum member 20a and the substrate 51 are adhered to each other. To adhere the aluminum member 20a to the substrate 51, for example, a double-sided tape may be used. An adhesive may be used instead of the double-sided tape. However, an adhesive power of the adhesive may be an adhesive power of a degree in which human hands can easily peel off the aluminum member 20a and the substrate 51 from each other. Thus, after using the insect trapping unit 1E, the aluminum member 20a can be separated from the adhesive sheet 10 and the winding mechanism. This is very useful in regions where it is necessary to separate incombustible materials and combustible materials when discarding.

A shape of the adhesive sheet 10 is as following. The adhesive sheet 10 has a first end 123 and a second end 124 at an opposite side from the first end 123. It should be noted that the "end" has a uniform width (e.g.: equal to or more than 2mm and equal to or less than 10mm) along longitudinal direction of the adhesive sheet 10. In the present embodiment, the adhesive sheet 10 is winded up in a roll form. Therefore, as shown in Fig. 17, a length from the first end 123 to the second end 124, that is, the length of the adhesive sheet 10 is longer enough than a distance D3 from the first roller 52₁ to the second roller 52₂. However, the length of the adhesive sheet 10 is limited. Therefore, the length of the adhesive sheet 10 is shorter than a prescribed length (e.g. : 2m). Of course, this prescribed length is longer enough than the distance D3. The width of the adhesive sheet 10 is uniform. In the present embodiment, for example, the width of the adhesive sheet 10 is same as the width D2 of the substrate 51.

The adhesive sheet 10 is on the aluminum member 20a so that its back surface 112 is opposed to the reflective surface 201a of the aluminum member 20a. That is, the adhesive surface 101 of the adhesive sheet 10 is exposed. The first end 123 is fixed to the first roller 52₁ by an adhesive or the like. The second end 124 is fixed to the second roller 52₂ by an adhesive or the like. The back surface 112 of the paper 11 (the back surface 102 of the adhesive sheet 10) is in contact with the reflective surface 201a of the aluminum member 20a. However, the paper 11 and the aluminum member 20a are not fixed to each other. In fact, there is a slight gap between the paper 11 and the aluminum member 20a.

### (Winding operation)

The operation of the winding mechanism (called winding operation) is as following. The insect trapping unit 1E is supposed to be new (unused) at an initial stage. At this time, the first end 123 of the adhesive sheet 10 is fixed to the first roller 52₁; however, the adhesive sheet 10 is not winded up around the first roller 52₁. On the other hand, the adhesive sheet 10 is winded up around the second roller 52₂.

During the winding operation, the first roller 52₁ rotates in the counterclockwise direction. In conjunction with this rotation, the second roller 52₂ also rotates in the counterclockwise direction too. At this time, the first roller 52₁ winds up the adhesive sheet 10 of a length D1 of the substrate 51. Therefore, an exposed portion of the adhesive sheet 10 (see region REG) moves on the aluminum member 20a to be winded up by the first roller 52₁. Then, a new portion of the adhesive sheet 10 appears over the substrate 51.

It should be noted that, in the present embodiment, each of the first roller 52₁ and the second roller 52₂ can independently rotate. However, in the present embodiment, as described above, the rotation of the second roller 52₂ is in conjunction with the rotation of the first roller 52₁. This is because the first end 123 and the second end 124 of the adhesive sheet 10 are fixed to the first roller 52₁ and the second roller 52₂, respectively. That is, this is because the adhesive sheet 10 transmits the rotation of the first roller 52₁ to the second roller 52₂. Thus, a gear to rotate the second roller 52₂ in conjunction with the rotation of the first roller 52₁, or such a member, is not necessary.

### (Insect trapping unit)

Fig. 17 is an exploded three-dimensional view of an insect trap 2C. The insect trap 2C has an insect trapping unit 1E, a light source 30a to emit ultraviolet ray, a housing 60, a front panel 61 and a drive control unit 62. The front panel 61 has a window 63.

The housing 60 has a size able to store the insect trapping unit 1E and the light source 30a. The housing 60 has a cubic shape, for example. The shape of the housing 60 may be another shape (e.g. : cylindrical) . The shape of the housing 60 and the shape of the front panel 61 is preferably a shape accompanied by aesthetics. The housing 60 is, for example, integrally formed with a synthetic resin. The insect trapping unit 1E is set inside the housing 60. The light source 30a is set over the insect trapping unit 1E. The front panel 61 is configured to be easily detached from and reattached to the housing 60. The front panel 61 is also, for example, integrally formed with a synthetic resin. The window 63 is provided at a part of the front panel 61. The window 63 has an enough size to radiate emitted ultraviolet ray and blue ray outside the housing 60 to attract flying flies to the housing 60.

The drive control unit 62 will be described. Fig. 18 is a block diagram showing a configuration example of a drive control unit 62. The drive control unit 62 has a memory 621, a microcomputer 622 and a motor 623. The drive control unit 62 controls the operation of the winding mechanism. The drive control unit 62 also controls lighting of the light source 30a. The memory 621 stores a control program related to the winding operation. The microcomputer 622 reads out the control program from the memory. The microcomputer 622 controls the operation of the winding mechanism in accordance with the control program which is read out. At this time, the microcomputer 622 outputs control signals (e.g.: high level voltage) to the motor 623 during winding operation. The motor 623 is connected to the first roller 52₁. The motor 623 rotates the first roller 52₁ in the counterclockwise direction while receiving the control signal. The rotation speed is almost constant.

Operations of the insect trap 2C will be described. The insect trap 2C has a regular mode and a winding mode. In the regular mode, the light source 30a irradiates ultraviolet ray to the adhesive surface 101 of the adhesive sheet 10. At this time, ultraviolet ray and blue ray emitted by the adhesive sheet 10 is radiated through the window 63 of the front panel 61. The flies flying around the insect trap 2C are attracted by ultraviolet ray or blue ray and enter in the window 63. Then, those flies are captured by the adhesive sheet 10.

The winding mode is a mode to automatically wind up the adhesive sheet 10. The winding mode is executed when a certain number (arbitrary) or more flies are captured. Alternatively, the winding mode may be executed every a certain period (e.g.: 24 hours) . When the winding mode is executed, the insect trap 2C operates as following. The microcomputer 622 outputs the control signal to the motor 623 during winding operation time. While receiving this control signal, the motor 623 rotates the first roller 52₁ in the counterclockwise direction. Then, the first roller 52₁ rotates in the counterclockwise direction. In conjunction with this rotation, the second roller 52₂ also rotates in the counterclockwise direction. Their rotation speeds are almost constant. Thus, the exposed portion of the adhesive sheet 10 (see region REG) moves on the aluminum member 20a to be winded up by the first roller 52₁. Then, a new portion of the adhesive sheet 10 appears.

The insect trap 2C has the substrate 51, the winding mechanism (the first roller 52₁, the second roller 52₂, the first roller holder 53₁ and the second roller holder 53₂) and the drive control unit 62. The adhesive sheet 10 is automatically winded up by this configuration. This is very useful. In addition, an effect can be obtained in that the insect trapping ability continues longtime.

It should be noted that the light source 30a may be a black light and may be an ultraviolet ray LED. In a case where ultraviolet ray LEDs are used, ultraviolet ray LEDs may be arranged as shown in Fig. 13 or Fig. 14. The insect trap 2C may be configured so that the winding mechanism manually operates. Alternatively, the winding mechanism may be configured so that turning on and turning off of the motor 623 can be manually controlled. In this case, the winding mechanism is preferably provided with the motor 623.

### 4. The fourth embodiment

In the present embodiment, other type of insect trapping unit will be described as an example. Fig. 19 is a cross sectional view of an insect trapping unit 1F. As shown in Fig. 19, an aluminum foil 20b is used as a reflective member. A thickness of the aluminum foil 20b is, for example, equal to or more than 5 micrometers and equal to or less than 15 micrometers. The reflective surface 201b of the aluminum foil 20b is fixed to the back surface 112 of the paper 11. In particular, the aluminum foil 20b and the paper 11 are adhered to each other.

The thickness of the aluminum foil 20b is much thinner, compared to the above described aluminum member 20a. Therefore, the insect trapping unit 1F is suitably applicable to the winding mechanism in the third embodiment. In a case of combining the insect trapping unit 1F with the winding mechanism, the above described aluminum member 20a needs not to be arranged on the substrate 51. An effect similar to the third embodiment can be obtained by use of the aluminum foil 20b, too. Of course, the present embodiment can be combined with the first or the second embodiment.

## Claims

1. An insect trapping unit (1) comprising:
an adhesive sheet (10) including a fluorescent whitening agent (103) and being transparent to ultraviolet ray; and
a reflective member (20) configured to reflect ultraviolet ray transmitted through the adhesive sheet (10) in a direction for the reflected ultraviolet ray to transmit through the adhesive sheet again,
wherein the adhesive sheet (10) comprises:
an adhesive surface (101); and
a back surface (102) which is in an opposite side to the adhesive surface (101), and
wherein the reflective member (20) is opposed to the back surface (102) of the adhesive sheet (10).

2. The insect trapping unit (1) according to claim 1,
wherein the adhesive sheet (10) is composed with:
a paper (11) including the fluorescent whitening agent (103), being transparent to ultraviolet ray and configured with a sheet which is a base body of the adhesive sheet (10); and
an adhesive layer (12),
wherein the paper (11) comprises:
a first surface (111) configured to form the adhesive surface (101) of the adhesive sheet (10); and
a second surface (112) which is the back surface (102) of the adhesive sheet (10), and
wherein the adhesive layer (12) is on the first surface (111).

3. The insect trapping unit (1) according to claim 1 or 2,
wherein the reflective member (20) is an aluminum member.

4. The insect trapping unit (1) according to claim 1,
wherein the reflective member (20) is an aluminum foil, and
wherein the aluminum foil is fixed on the back surface (102) of the adhesive sheet (10).

5. The insect trapping unit (1) according to any of claims 2 to 4, further comprising:
a coating layer (13),
wherein the coating layer (13) is arranged between the first surface (111) of the paper (11) and the adhesive layer (12).

6. The insect trapping unit (1) according to any of claims 1 to 5, further comprising:
a substrate (51) on which the adhesive sheet (10) is mounted; and
a winding mechanism (52₁, 52₂, 53₁, 53₂) configured to wind up the adhesive sheet mounted on the substrate in one direction, and
wherein the reflective member (20) is arranged between the adhesive sheet (10) and the substrate (51).

7. The insect trapping unit (1) according to claim 6,
wherein the substrate (51) comprises four edges among which a first edge (511) and a second edge (512) opposite to the first edge are in parallel to each other,
wherein the winding mechanism comprises:
a first roller (52₁) having a first roller shaft, wherein the first roller (52₁) is arranged along the first edge (511) so that the first roller shaft is parallel to the first edge; and
a second roller (52₂) having a second roller shaft, wherein the second roller (52₂) is arranged along the second edge (512) so that the second roller shaft is parallel to the second edge,
wherein the adhesive sheet (10) comprises:
a first end (123); and
a second end (124) in an opposite side to the first end (123);
wherein a length from the first end to the second end is longer than a distance from the first roller to the second roller and shorter than a given length,
wherein the first end is fixed to the first roller, and
wherein the second end is fixed to the second roller.

8. An insect trap (2A, 2B) comprising:
the insect trapping unit (1) according to any of claims 1 to 7; and
a light source (30a₁,30a₂) configured to emit an ultraviolet ray,
wherein the adhesive sheet is arranged between the light source and the reflective sheet so that the ultraviolet ray can be received from the light source, and
wherein the light source is configured to irradiate the adhesive surface of the adhesive sheet.

9. The insect trap (2A, 2B) according to claim 8,
wherein the light source comprises:
a first light source (30a₁) having a first irradiation direction; and
a second light source (30a₂) having a second irradiation direction,
wherein the first irradiation direction is a direction in which the first light source irradiates the adhesive surface of the adhesive sheet, and
wherein the second irradiation direction is different to the first irradiation direction.

10. The insect trap according to claim 8 or 9,
wherein the light source (30a₁, 30a₂) is an ultraviolet ray LED (Light Emitting Diode).

## Patentansprüche

1. Insektenfalleneinheit (1), umfassend:
eine Haftschicht (10), die ein fluoreszierendes Bleichmittel (103) enthält und für ultraviolette Strahlung transparent ist; und
ein reflektierendes Element (20), das dazu konfiguriert ist, ultraviolette Strahlung zu reflektieren, die durch die Haftschicht (10) transmittiert wird, in einer Richtung derart, dass die reflektierte ultraviolette Strahlung erneut durch die Haftschicht transmittiert wird,
wobei die Haftschicht (10) Folgendes umfasst:
eine Haftoberfläche (101); und
eine Rückoberfläche (102), die an einer entgegengesetzten Seite zu der Haftoberfläche (10) ist, und
wobei das reflektierende Element (20) entgegengesetzt zu der Rückoberfläche (102) der Haftschicht (10) ist.

2. Insektenfalleneinheit (1) nach Anspruch 1, wobei die Haftschicht (10) gebildet ist mit:
einem Papier (11), das das fluoreszierende Bleichmittel (103) enthält, das für ultraviolette Strahlung transparent ist, und das mit einer Schicht konfiguriert ist, die ein Basiskörper der Haftschicht (10) ist; und
einer Haftlage (12),
wobei das Papier (11) Folgendes umfasst:
eine erste Oberfläche (111), die dazu konfiguriert ist, die Haftoberfläche (101) der Haftschicht (10) zu bilden; und
eine zweite Oberfläche (112), die die Rückoberfläche (102) der Haftschicht (10) ist, und
wobei die Haftlage (12) auf der ersten Oberfläche (111) ist.

3. Insektenfalleneinheit (1) nach Anspruch 1 oder 2, wobei das reflektierende Element (20) ein Aluminiumelement ist.

4. Insektenfalleneinheit (1) nach Anspruch 1, wobei das reflektierende Element (20) eine Aluminiumfolie ist, und wobei die Aluminiumfolie an der Rückoberfläche (102) der Haftschicht (10) befestigt ist.

5. Insektenfalleneinheit (1) nach einem der Ansprüche 2 bis 4, ferner umfassend:
eine Beschichtungslage (13),
wobei die Beschichtungslage (13) zwischen der ersten Oberfläche (111) des Papiers (11) und der Haftlage (12) angeordnet ist.

6. Insektenfalleneinheit (1) nach einem der Ansprüche 1 bis 5, ferner umfassend:
ein Substrat (51), auf dem die Haftschicht (10) montiert ist; und
einen Wickelmechanismus (52₁, 52₂, 53₁, 53₂), der dazu konfiguriert ist, die auf dem Substrat montierte Haftschicht in einer Richtung aufzuwickeln, und
wobei das reflektierende Element (20) zwischen der Haftschicht (10) und dem Substrat (51) angeordnet ist.

7. Insektenfalleneinheit (1) nach Anspruch 6, wobei das Substrat (51) vier Kanten umfasst, von denen eine erste Kante (511) und eine zweite Kante (512) entgegengesetzt zu der ersten Kante parallel zueinander sind, wobei der Wickelmechanismus Folgendes umfasst:
eine erste Rolle (52₁) mit einer ersten Rollenwelle, wobei die erste Rolle (52₁) entlang der ersten Kante (511) derart angeordnet ist, dass die erste Rollenwelle parallel zu der ersten Kante ist; und
eine zweite Rolle (52₂) mit einer zweiten Rollenwelle, wobei die zweite Rolle (52₂) entlang der zweiten Kante (512) derart angeordnet ist, dass die zweite Rollenwelle parallel zu der zweiten Kante ist, wobei die Haftschicht (10) Folgendes umfasst:
ein erstes Ende (123); und
ein zweites Ende (124) an einer entgegengesetzten Seite zu dem ersten Ende (123);
wobei eine Länge von dem ersten Ende zu dem zweiten Ende länger ist als eine Distanz von der ersten Rolle zu der zweiten Rolle und kürzer als eine gegebene Länge,
wobei das erste Ende an der ersten Rolle befestigt ist, und
wobei das zweite Ende an der zweiten Rolle befestigt ist.

8. Insektenfalle (2A, 2B), umfassend:
die Insektenfalleneinheit (1) nach einem der Ansprüche 1 bis 7; und
eine Lichtquelle (30a₁, 30a₂), die dazu konfiguriert ist, eine ultraviolette Strahlung zu emittieren,
wobei die Haftschicht zwischen der Lichtquelle und der reflektierenden Schicht derart angeordnet ist, dass die ultraviolette Strahlung von der Lichtquelle empfangen werden kann, und
wobei die Lichtquelle dazu konfiguriert ist, die Haftoberfläche der Haftschicht zu bestrahlen.

9. Insektenfalle (2A, 2B) nach Anspruch 8, wobei die Lichtquelle Folgendes umfasst:
eine erste Lichtquelle (30a₁) mit einer ersten Bestrahlungsrichtung; und
eine zweite Lichtquelle (30a₂) mit einer zweiten Bestrahlungsrichtung,
wobei die erste Bestrahlungsrichtung eine Richtung ist, in der die erste Lichtquelle die Haftoberfläche der Haftschicht bestrahlt, und
wobei die zweite Bestrahlungsrichtung von der ersten Bestrahlungsrichtung verschieden ist.

10. Insektenfalle nach Anspruch 8 oder 9, wobei die Lichtquelle (30a₁, 30a₂) eine LED (lichtemittierende Diode) mit ultravioletter Strahlung ist.

## Revendications

1. Unité de piégeage d'insectes (1) comprenant :
une bande adhésive (10) qui comprend un agent blanchissant fluorescent (103) qui est transparent aux rayons ultraviolets ; et
un élément réfléchissant (20) configuré pour réfléchir les rayons ultraviolets transmis par le biais de la bande adhésive (10) dans une direction qui permette aux rayons ultraviolets réfléchis d'être transmis à nouveau par le biais de la bande adhésive,
dans laquelle la bande adhésive (10) comprend :
une surface adhésive (101) ; et
une surface arrière (102) qui se trouve sur un côté opposé à la surface adhésive (101), et
dans laquelle l'élément réfléchissant (20) est opposé à la surface arrière (102) de la bande adhésive (10) .

2. Unité de piégeage d'insectes (1) selon la revendication 1,
dans laquelle la bande adhésive (10) est composée :
d'un papier (11) comprenant l'agent blanchissant fluorescent (103), qui est transparent aux rayons ultraviolets et configuré avec une bande qui est un corps de base de la bande adhésive (10) ; et
une couche adhésive (12),
dans laquelle le papier (11) comprend :
une première surface (111) configurée pour former la surface adhésive (101) de la bande adhésive (10) ; et
une seconde surface (112) qui est la surface arrière (102) de la bande adhésive (10), et
dans laquelle la couche adhésive (12) se trouve sur la première surface (111).

3. Unité de piégeage d'insectes (1) selon la revendication 1 ou 2, dans laquelle l'élément réfléchissant (20) est un élément en aluminium.

4. Unité de piégeage d'insectes (1) selon la revendication 1,
dans laquelle l'élément réfléchissant (20) est une feuille d'aluminium, et
dans laquelle la feuille d'aluminium est fixée sur la surface arrière (102) de la bande adhésive (10).

5. Unité de piégeage d'insectes (1) selon l'une quelconque des revendications 2 à 4, comprenant en outre :
une couche de revêtement (13),
dans laquelle la couche de revêtement (13) est prévue entre la première surface (111) du papier (11) et la couche adhésive (12).

6. Unité de piégeage d'insectes (1) selon l'une quelconque des revendications 1 à 5, comprenant en outre :
un substrat (51) sur lequel la bande adhésive (10) est montée ; et
un mécanisme d'enroulement (52₁, 52₂, 53₁, 53₂) configuré pour enrouler la bande adhésive montée sur le substrat dans une direction, et
dans laquelle l'élément réfléchissant (20) est prévu entre la bande adhésive (10) et le substrat (51).

7. Unité de piégeage d'insectes (1) selon la revendication 6,
dans laquelle le substrat (51) comprend quatre bords parmi lesquels un premier bord (511) et un second bord (512) opposé au premier bord sont parallèles l'un à l'autre,
dans laquelle le mécanisme d'enroulement comprend :
un premier galet (52₁) ayant un premier arbre de galet, dans laquelle le premier galet (52₁) est prévu le long du premier bord (511) de sorte que le premier arbre de galet soit parallèle au premier bord ; et
un second galet (52₂) ayant un second arbre de galet, dans laquelle le second galet (52₂) est prévu le long du second bord (512) de sorte que le second arbre de galet soit parallèle au second bord,
dans laquelle la bande adhésive (10) comprend :
une première extrémité (123) ; et
une seconde extrémité (124) sur un côté opposé à la première extrémité (123) ;
dans laquelle une longueur entre la première extrémité et la seconde extrémité est supérieure à une distance entre le premier galet et le second galet et inférieure à une longueur donnée,
dans laquelle la première extrémité est fixée sur le premier galet, et
dans laquelle la seconde extrémité est fixée sur le second galet.

8. Piège à insectes (2A, 2B) comprenant :
l'unité de piégeage d'insectes (1) selon l'une quelconque des revendications 1 à 7 ; et
une source de lumière (30a₁, 30a₂) configurée pour émettre des rayons ultraviolets,
dans lequel la bande adhésive est prévue entre la source de lumière et la bande réfléchissante de sorte que les rayons ultraviolets puissent être reçus de la part de la source de lumière, et
dans lequel la source de lumière est configurée pour irradier la surface adhésive de la bande adhésive.

9. Piège à insectes (2A, 2B) selon la revendication 8,
dans lequel la source de lumière comprend :
une première source de lumière (30a₁) ayant une première direction d'irradiation ; et
une seconde source de lumière (30a₂) ayant une seconde direction d'irradiation,
dans lequel la première direction d'irradiation est une direction dans laquelle la première source de lumière irradie la surface adhésive de la bande adhésive, et
dans lequel la seconde direction d'irradiation est différente de la première direction d'irradiation.

10. Piège à insectes selon la revendication 8 ou 9,
dans lequel la source de lumière (30a₁, 30a₂) est une LED (diode électroluminescente) à rayons ultraviolets.
